# EUROPÄISCHE PATENTSCHRIFT

(11) **EP 3 203 124 B1**
(45) Veröffentlichungstag und Bekanntmachung des Hinweises auf die Patenterteilung: **26.02.2020**
(21) Anmeldenummer: 17150162.0
(22) Anmeldetag: 03.01.2017
(51) Int. Cl.: F16K 7/12, F16K 7/16

(54) **ELASTOMER-MEMBRANELEMENT**
ELASTOMER MEMBRANE ELEMENT
ÉLÉMENT DE MEMBRANE EN ÉLASTOMÈRE

(30) Priorität: 02.02.2016 DE 102016101782
(43) Veröffentlichungstag der Anmeldung: 09.08.2017
(73) Patentinhaber: GEMÜ Gebr. Müller Apparatebau GmbH & Co. Kommanditgesellschaft, 74653 Ingelfingen (DE)
(72) Erfinder: Müller, Fritz, 74653 Ingelfingen (DE); Oettinger, Nicole, 74653 Künzelsau (DE); Mayer, Peter, 74523 Schwäbisch Hall (DE)
(74) Vertreter: DREISS Patentanwälte PartG mbB

(56) Entgegenhaltungen:
- EP-A1- 2 952 790
- AU-A- 1 669 870
- GB-A- 2 399 616
- US-A- 6 079 692
- US-A1- 2006 162 547
- US-A1- 2009 076 464
- US-A1- 2012 200 047

## Beschreibung

Die Erfindung betrifft ein Elastomer-Membranelement nach dem Oberbegriff des Anspruchs 1.

Elastomer-Membranelemente sind allgemein bekannt. Insbesondere sind Membrane bekannt, die an einem Rand zwischen zwei Ventilgehäuseteilen fest eingespannt werden. Auch sind Metalleinlagen innerhalb eines Einspannrandes der Membran bekannt. Beispielhaft wird auf die DE 2 307 580 A1 verwiesen.

US 6 079 692 A offenbart eine kombinierte Membran- und Dichtungsvorrichtung für Ventile, die es ermöglicht, automatische Regelventile und andere Ventile mit einer industrieüblichen Nutkupplung anstelle einer Vielzahl von Schrauben durch einen Außenflansch am Ventilkörper zu schließen.

US 2012/200047 A1 offenbart eine Dichtungsanordnung umfassend einen Befestigungsbolzen, ein Armierungsgewebe, einen starren Träger, einen elastomeren Körper und eine Elastomerfolie.

US 2009/076464 A1 offenbart eine chirurgische Portalanordnung umfassend ein Portal, das so angepasst ist, dass es Zugang zu darunterliegendem Gewebe bietet und eine Längsöffnung aufweist, die sich entlang einer Längsachse des Portals erstreckt und proximale und distale Enden definiert, sowie eine Dichtung.

AU 16698 70 A offenbart ein Membranventil mit einer flexiblen Membran in laminierter Bauweise, die um ihren Umfang zwischen einer Schulter an einem Gehäuseteil des Ventils, das den Durchfluss durch das Ventil umgibt, und einem Flansch an einem Oberteil, das den Membranantriebsmechanismus des Ventils aufnimmt und an dem Gehäuseteil befestigt ist, eingespannt ist. Die Membran umfasst eine reduzierte Dicke in der Klemmzone.

EP 2 952 790 A1 offenbart ein Zwischenstück für ein Absperrorgan, insbesondere ein Membranventil, für Fluide. Ein Druckstück ist in dem Zwischenstück anordenbar. Das Druckstück weist wenigstens zwei Verriegelungsschieber zu einem Verriegeln eines Verriegelungsglieds eines Verschlusselements auf. Das Zwischenstück weist einen Zylinder auf, in dem das Druckstück axial führbar ist. Das Zwischenstück weist eine Ausnehmung auf, die derart angeordnet ist, dass in einer Montageposition des Druckstücks sich die Verriegelungsschieber in die Ausnehmung verlagern und damit das Verriegelungsglied freigeben.

US 2006/162547 A1 offenbart eine Membrane für Membranventile insbesondere für flüssige Medien, bestehend aus einer Stützmembrane und einem Membraneschild (Dichtmembrane), die an einem zentralen Verbindungsstift gehalten sind. Axial zwischen der Stützmembrane und dem Membraneschild ist ein Versteifungselement angeordnet.

GB 2 399 616 A offenbart eine Membran für ein Membranventil umfassend eine Umfangszone, die im Gebrauch zwischen einem Flansch, der an einem Ventilkörper vorgesehen ist, und einem Flansch, der an einem Antriebsmechanismus vorgesehen ist, komprimiert wird.

Des Weiteren ist bekannt, dass beim Verpressen der Membrane und dem Steg Materialanhäufungen zur Faltenbildung führen können, welche die Lebensdauer des Elastomer-Membranelements beeinflussen.

Mithin ist es Aufgabe der Erfindung, ein Elastomer-Membranelement dahingehend weiterzubilden, dass eine sichere Funktion des Elastomer-Membranelements gewährleistet werden kann.

Die der Erfindung zugrunde liegende Aufgabe wird durch ein Elastomer-Membranelement nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf nochmals explizit hingewiesen wird.

Es wird ein Elastomer-Membranelement für ein Membranventil vorgeschlagen, wobei das Elastomer-Membranelement einen Arbeitsabschnitt zum Öffnen und Schließen eines Fluidkanals des Membranventils umfasst, und wobei das Elastomer-Membranelement einen den Arbeitsabschnitt umgebenden Befestigungsabschnitt zur Festlegung des Elastomer-Membranelements gegenüber einem Ventilkörper des Membranventils umfasst. Zwischen dem Arbeitsabschnitt und dem Befestigungsabschnitt ist zumindest abschnittsweise eine Ausnehmung angeordnet, wodurch es ermöglicht wird, dass während des Betriebs des Elastomer-Membranelements Restverformungen aus dem Arbeitsabschnitt in die Ausnehmung hinein fließen können, ohne dass dadurch die Funktion des Arbeitsabschnitts beeinträchtigt wird. Insbesondere auf der Mediumseite des Elastomer-Membranelements kann durch ein Abfließen des Elastomer-Materials in die Ausnehmung hinein verhindert werden, dass das Schließen des Fluidkanals durch eine Verformung des Arbeitsabschnitts auf der Mediumseite beeinträchtigt wird. Auf einer Trockenseite kann durch das mögliche Abfließen des Elastomer-Materials in die Ausnehmung hinein die Wahrscheinlichkeit einer Faltenbildung reduziert werden.

In einer vorteilhaften Ausführungsform springt eine erste Anlagefläche des Befestigungsabschnitts auf der Mediumseite in einem nicht montierten Zustand des Elastomer-Membranelements gegenüber einer zweiten Anlagefläche, welche sich auf der Mediumseite radial nach innen an die Ausnehmung anschließt, zurück. Bei der Montage des Elastomer-Membranelements mittels des Befestigungsabschnitts wird die erste Anlagefläche an eine ebene Anlagefläche eines Ventilstücks gedrückt. Hierdurch wird eine Materialverjüngung im Bereich der Ausnehmung durch die gegenüber der ersten Anlagefläche vorspringende zweite Anlagefläche unter Zug gesetzt, wodurch die zweite Anlagefläche durch Anliegen an der Anlagefläche des Ventilstücks die Ausnehmung zum Medium führenden Bereich des Arbeitsabschnitts hin abdichtet.

Die Ausnehmung öffnet sich hin zur Mediumseite des Membranelements. Hierdurch wird die Ausnehmung gegenüber Beeinflussungen von der Trockenseite herrührend geschützt.

In einer vorteilhaften Ausführungsform ist die Ausnehmung radial außerhalb eines mediengeführten Bereichs angeordnet. Es kann vorteilhaft erreicht werden, dass die Ausnehmung einen Aufnahmebereich für verfließende Materialanhäufungen bzw. Restverformungen des Elastomer-Materials bildet und nicht durch einen Fluiddruck oder eine Membranbewegung unmittelbar beeinflusst wird.

In einer vorteilhaften Ausführungsform ist die Ausnehmung zumindest abschnittsweise kreisringförmig ausgebildet. Hierdurch wird es ermöglicht, einen im Wesentlichen rotationssymmetrisch ausgebildeten Arbeitsbereich zu schaffen. Der im Wesentlichen rotationssymmetrisch ausgebildete Arbeitsbereich ist in und entgegen einer Zustellrichtung leicht verformbar, wodurch ein Ventilantrieb schwächer ausgebildet sein kann.

Der Befestigungsabschnitt umfasst eine im Wesentlichen starre Einlage. Die Ausnehmung schließt sich radial nach innen an die starre Einlage an. So werden zum einen mögliche Materialverformungen im Befestigungsabschnitt verringert und zum anderen Materialverformungen insbesondere ein Verfließen des Elastomer-Materials im Bereich des Arbeitsabschnitts erlaubt. Des Weiteren ermöglicht die starre Einlage Freiheitsgrade bei der Anordnung und Ausführung des Befestigungsabschnitts.

Die starre Einlage weist zumindest abschnittsweise eine ringförmige Innenkontur auf. Hierdurch wird die Basis für die rotationssymmetrische Ausführung des Arbeitsabschnitts geschaffen. Die rotationssymmetrische Ausführung ermöglicht eine radial gleichmäßige Kräfteverteilung innerhalb des Arbeitsabschnitts. Darüber hinaus wird der fluidführende Bereich des Elastomer-Membranelements ringförmig nach außen abgedichtet.

In einer vorteilhaften Ausführungsform umfasst der Arbeitsabschnitt eine Gewebeeinlage, wobei die Gewebeeinlage innerhalb des Arbeitsabschnitts hin zu einer Trockenseite des Elastomer-Membranelements angeordnet ist. Hierdurch wird das Elastomer-Membranelement hin zur Trockenseite stabilisiert. Insbesondere Dehnungskonturen wie beispielsweise Verstärkungsrippen auf der Trockenseite können durch die Gewebeeinlage stabilisiert werden.

In einer vorteilhaften Ausführungsform ragt ein Befestigungsmittel für ein Druckstück eines Ventilantriebs auf der Trockenseite des Membranelements von dem Arbeitsabschnitt ab, wobei das Befestigungsmittel abschnittsweise in dem Elastomer-Membranelement aufgenommen ist, und wobei die Gewebeeinlage in einen Durchmesserrücksprung des Befestigungsmittels hineinragt. Auch bei nicht unmittelbarer Befestigung der Gewebeeinlage an dem Befestigungsmittel wird insbesondere bei Bewegungen des Arbeitsabschnitts entgegen der Zustellrichtung eine Kraftübertragung vom Befestigungsmittel in den Arbeitsbereich hinein durch die Gewebeeinlage unterstützt.

In einer vorteilhaften Ausführungsform umfasst die Trockenseite des Arbeitsabschnitts konzentrische Dehnungskonturen. Hierdurch wird eine Faltenbildung bei der Bewegung des Arbeitsabschnitts verringert und gleichzeitig die Stabilität des Elastomer-Membranelements verbessert. Insbesondere kann eine Dicke der Membran durch das Vorsehen der konzentrischen Dehnungskonturen reduziert werden, was sich vorteilhaft auf die Bewegbarkeit entlang der Zustellachse auswirkt. Mithin ist weniger Kraftaufwand zur Bewegung des Arbeitsbereichs entlang der Zustellachse nötig und ein Ventilantrieb kann schwächer ausgelegt werden.

In einer vorteilhaften Weiterbildung sind die konzentrischen Dehnungskonturen durch Anlageflächen für ein Druckstück eines Ventilantriebs des Membranventils unterbrochen. Durch die Anlageflächen wird die Kraftübertragung vom Druckstück auf das Elastomer-Membranelement ermöglicht und gleichzeitig wird durch die konzentrischen Dehnungskonturen eine Faltenbildung verringert.

Weitere Merkmale und Vorteile der Erfindung ergeben sich aus der nachfolgenden Beschreibung von Ausführungsbeispielen. Für funktionsäquivalente Merkmale und Größen werden allen Figuren die gleichen Bezugszeichen verwendet, ohne dass nochmals darauf hingewiesen wird. In der Zeichnung zeigen:
- Figur 1: in einer schematischen perspektivischen Ansicht ein Elastomer-Membranelement für ein Membranventil;
- Figur 2: eine schematische Draufsicht auf eine Trockenseite des Elastomer-Membranelements;
- Figuren 3 und 5: jeweils eine schematische Schnittansicht des Elastomer-Membranelements;
- Figur 4: einen vergrößerten Ausschnitt der Schnittansicht aus Figur 3 im Bereich einer Ausnehmung;
- Figur 6: eine schematische Seitenansicht der einzelnen Komponenten zur Herstellung des Elastomer-Membranelements; und
- Figur 7: eine perspektivische Explosionsansicht der Anordnung aus Figur 6.

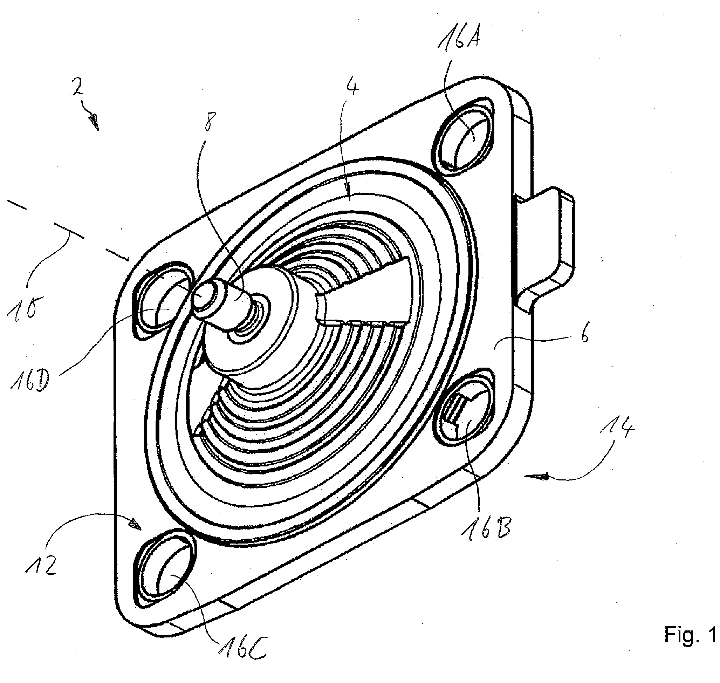

Figur 1 zeigt in einer schematischen perspektivischen Ansicht ein Elastomer-Membranelement 2 für ein Membranventil. Das Elastomer-Membranelement 2 umfasst einen Arbeitsabschnitt 4, der innerhalb eines Befestigungsabschnitts 6 angeordnet ist. Der Arbeitsabschnitt 4 umfasst ein Befestigungsmittel 8, um den Arbeitsabschnitt 4 mit einem Druckstück zu verbinden und mittels des Druckstücks entlang einer Zustellachse 10 zu bewegen. Das Befestigungsmittel 8 ragt von einer Trockenseite 12 des Elastomer-Membranelements 2, welche einer Mediumseite 14 gegenüberliegt, ab und umfasst beispielsweise ein Außengewinde.

Der Befestigungsabschnitt 6 umfasst Durchgangsöffnungen 16A, 16B, 16C und 16D, durch welche weitere Befestigungsmittel führbar sind, um das Elastomer-Membranelement 2 gegenüber einem Ventilkörper des Membranventils auf Block anzuziehen. Mithin ist der den Arbeitsabschnitt 4 umgebende Befestigungsabschnitt 6 zur Festlegung des Elastomer-Membranelements 2 gegenüber dem Ventilkörper des Membranventils ausgebildet.

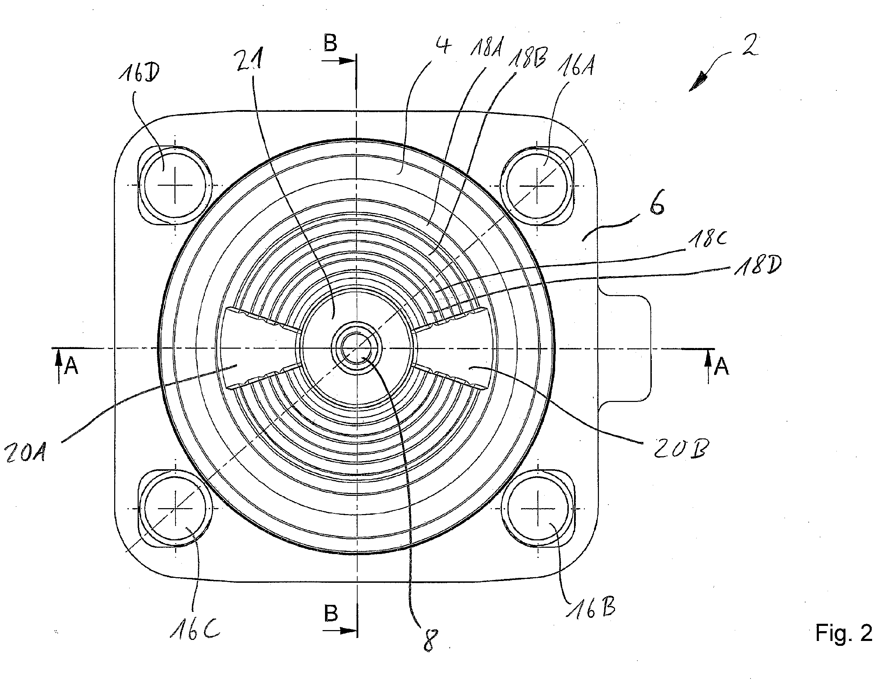

Figur 2 zeigt eine schematische Draufsicht auf die Trockenseite 12 des Elastomer-Membranelements 2. Der Befestigungsabschnitt 6 begrenzt den Arbeitsabschnitt 4 kreisringförmig. Der Arbeitsabschnitt 4 ist im Wesentlichen rotationssymmetrisch aufgebaut und umfasst auf der Trockenseite 12 konzentrische Dehnungskonturen 18A, 18B, 18C und 18D. Die Dehnungskonturen 18A bis 18D sind zumindest abschnittsweise als kreisringförmige Vorsprünge konzentrisch zueinander angeordnet und haben einen gemeinsamen Mittelpunkt auf der Zustellachse 10. Die konzentrischen Dehnungskonturen 18A bis 18D sind durch sich gegenüberliegende, durchgängige und nicht unterbrochene Anlageflächen 20A und 20B zur Anlage eines Druckstücks eines Ventilantriebs des Membranventils unterbrochen. Das Befestigungsmittel 8 ragt auf der Trockenseite 12 von einer zentralen Verdickung 21 ab.

In einer nicht gezeigten Ausführungsform kann zumindest eine Dehnungskontur, beispielsweise als zumindest abschnittsweise umlaufende Rippe, auf der Trockenseite 12 angeordnet sein. Diese zumindest eine Dehnungskontur ist bevorzugt dort angeordnet, wo Biegungen und Belastungen auftreten, um eine höhere Festigkeit der Membrane gegen Druck und letztendlich gegen eine Rissbildung bei Beibehaltung der Flexibilität zu erreichen.

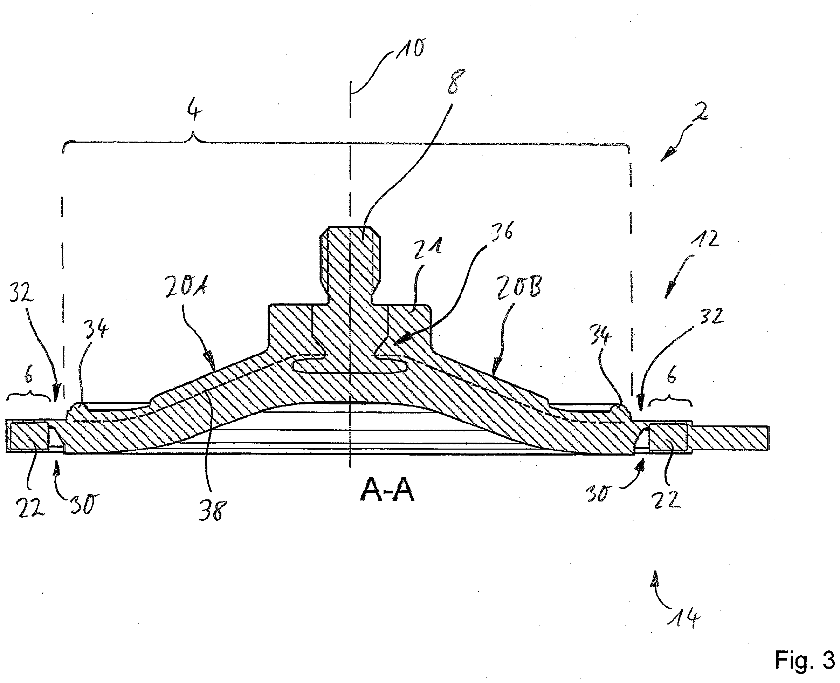

Figur 3 zeigt eine schematische Schnittansicht des Elastomer-Membranelements 2 gemäß eines Schnitts A-A aus Figur 2. Der Befestigungsabschnitt 6 umfasst eine zumindest teilweise einvulkanisierte, starre Einlage 22, welche vorliegend im Schnitt als durchgängiges Material, insbesondere aus Metall, ausgebildet ist. Selbstverständlich kann die starre Einlage 22 auch als gebogenes Blech ausgestaltet sein.

Die starre Einlage 22 ist zumindest teilweise von einem Elastomer-Material umgeben. Auf der Mediumseite 14 des Elastomer-Membranelements 2 schließt sich zur Zustellachse 10 hin eine kreisringförmige Ausnehmung 30 an den Befestigungsabschnitt 6 an, welche sich hin zu der Mediumseite 14 öffnet. Entsprechend ergibt sich im Bereich der Ausnehmung 30 zwischen dem Befestigungsabschnitt 6 und dem Arbeitsabschnitt 4 eine Materialverjüngung 32. Hin zur Zustellachse 10 schließt sich an die Materialverjüngung 32 der Arbeitsabschnitt 4 mit einer kreisringförmigen Erhebung 34 an.

Das Befestigungsmittel 8, welches in der zentralen Verdickung 21 angeordnet ist, umfasst einen Durchmesserrücksprung 36. Das Befestigungsmittel 8 ist somit zumindest abschnittsweise in dem Elastomer-Membranelement 2 aufgenommen. Eine Gewebeeinlage 38 erstreckt sich flächig entlang eines Verlaufs des Arbeitsabschnitts 4 und ist hin zur Trockenseite 12 des Elastomer-Membranelements 2 angeordnet. Des Weiteren erstreckt sich die Gewebeeinlage 38 in den Durchmesserrücksprung 36 hinein.

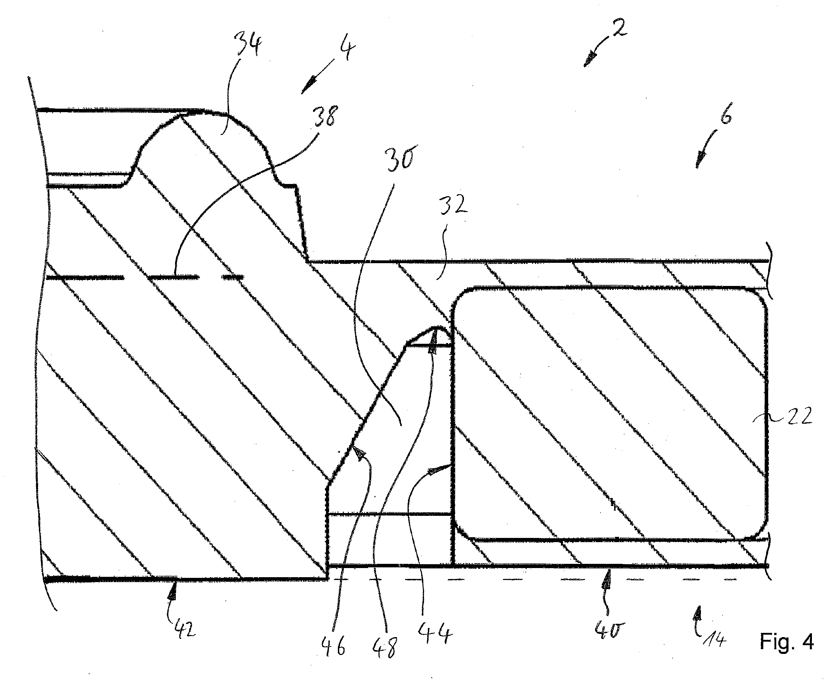

Figur 4 zeigt einen vergrößerten Ausschnitt der Schnittansicht aus Figur 3 im Bereich der Ausnehmung 30. Eine erste Anlagefläche 40 des Befestigungsabschnitts 6 befindet sich auf der Mediumseite 14 des Elastomer-Membranelements 2. Eine zweite, ebenfalls auf der Mediumseite 14 angeordnete Anlagefläche 42 schließt sich an die Ausnehmung 30 hin zur Zustellachse 10 an und ist dem Arbeitsabschnitt 4 zugeordnet. Es ist ein nicht montierter und entspannter Zustand des Elastomer-Membranelements 2 gezeigt. Dadurch, dass die erste Anlagefläche 40 gegenüber der zweiten Anlagefläche 42 zurückspringt, wird bei einem gleichzeitigen Aufliegen der beiden Anlageflächen 40 und 42 auf einer ebenen Anlagefläche des Ventilkörpers des Membranventils die Anlagefläche 42 auf diese ebene Anlagefläche gedrückt. Damit ist die Ausnehmung 30 von einem fluidgeführten Bereich des Arbeitsabschnitts 4 abgeschottet und es kann kein Fluid in die Ausnehmung 30 eintreten. Gleichzeitig wird die Materialverjüngung 32 im Bereich der Ausnehmung 30 verformt.

Die Ausnehmung 30 schließt sich im Wesentlichen unmittelbar an die starre Einlage 22 an. Eine dünne Elastomer-Schicht 44 trennt die starre Einlage 22 von der Ausnehmung 30. Des Weiteren verjüngt sich die Ausnehmung 30 in Richtung der Trockenseite 6. Ausgehend von der Öffnung der Ausnehmung 30 weist die Ausnehmung 30 zunächst eine konstante Öffnungsweite auf und verjüngt sich anschließend entlang einer radial nach innen angeordneten Schräge 46 in Richtung der Trockenseite 6. Die Schräge 46 geht in eine Wölbung 48 über, welche die geringste Dicke der Materialverjüngung 32 definiert. Des Weiteren weist die starre Einlage 22 radial nach innen zumindest abschnittsweise eine ringförmige Innenkontur im Bereich der Elastomer-Schicht 44 auf.

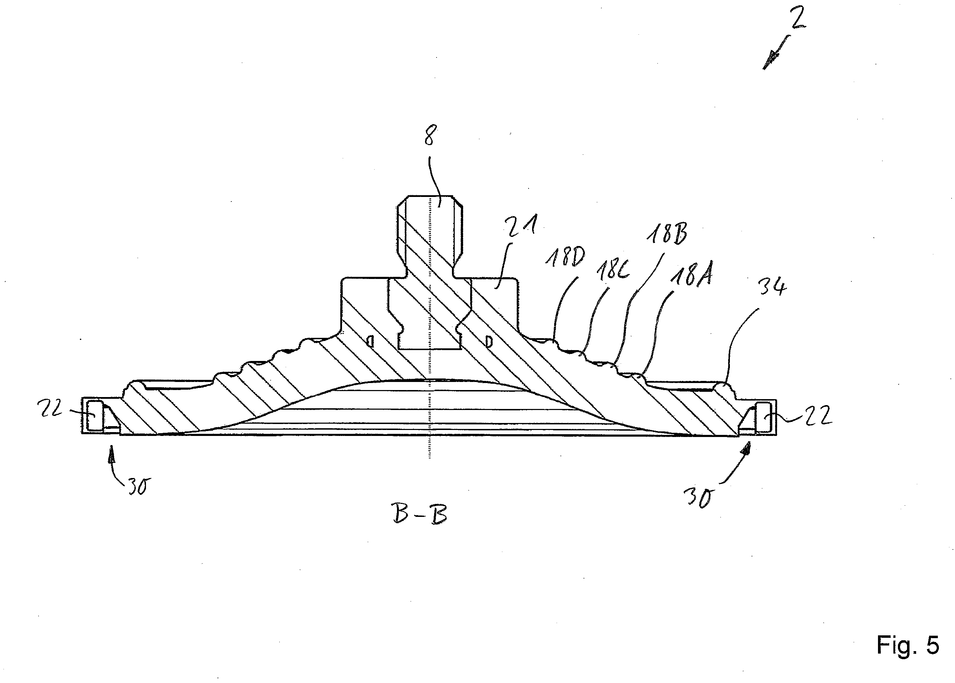

Figur 5 zeigt eine schematische Schnittansicht des Elastomer-Membranelements 2 gemäß eines Schnitts B-B aus der Figur 2. Aus Übersichtsgründen ist die Gewebeeinlage 38 nicht gezeigt.

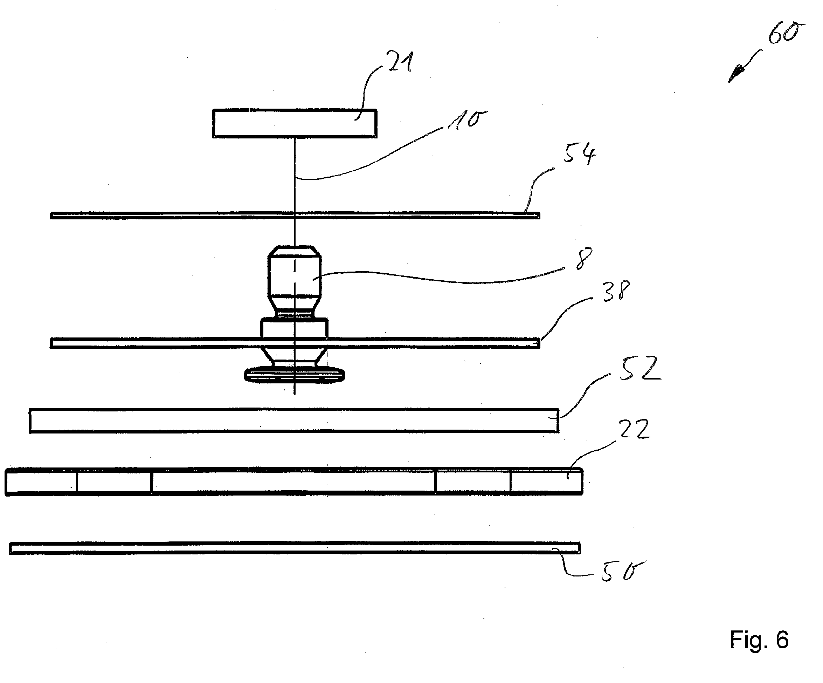

Figur 6 zeigt eine schematische Seitenansicht der einzelnen Komponenten zur Herstellung des Elastomer-Membranelements 2 gemäß einer Anordnung 60. Die Komponenten sind teilweise mit demselben Bezugszeichen versehen wie bei dem hergestellten Elastomer-Membranelement 2 in den Figuren 1 bis 5. Eine Grundplatte 50, eine Einsatzplatte 52, eine Abschlussplatte 54 sowie Verdickung 21 sind beispielsweise aus Ethylen-Propylen-Dien-Kautschuk, EPDM. Des Weiteren ist die Gewebeeinlage 38 gezeigt. Das Befestigungsmittel 8 sowie die starre Einlage 22 sind bevorzugt aus einem Metall gefertigt.

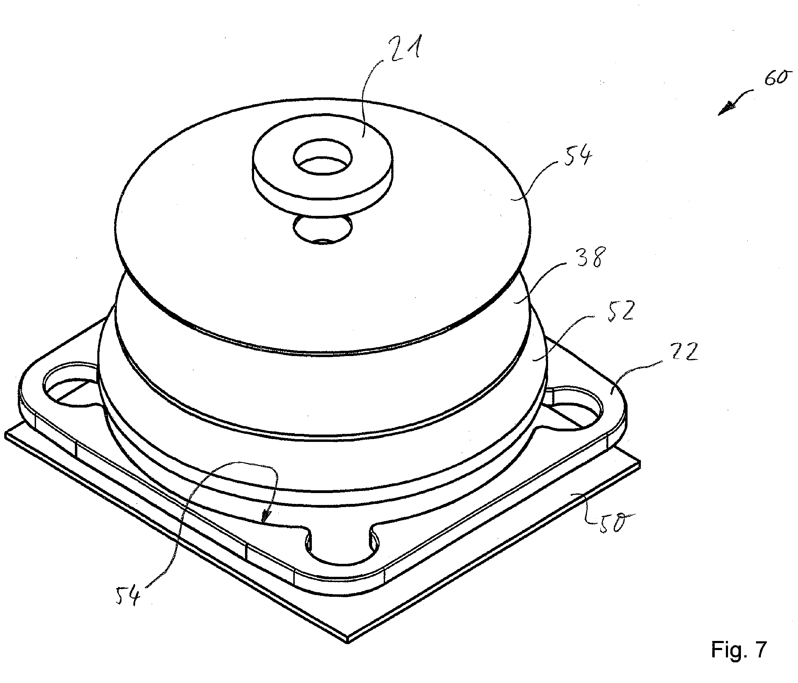

Figur 7 zeigt eine perspektivische Explosionsansicht der Anordnung aus Figur 6 ohne das Befestigungsmittel 8. So ist gezeigt, wie die Einsatzplatte 52 in die zumindest abschnittsweise kreisringförmige Innenkontur 54 der starren Einlage 22 einpassbar ist. Mit dem zusätzlich angeordneten Befestigungsmittel 8 kann die Anordnung 60 vulkanisiert werden, womit das Elastomer-Membranelement 2 hergestellt wird.

## Patentansprüche

1. Ein Elastomer-Membranelement (2) für ein Membranventil, wobei das Elastomer-Membranelement (2) einen Arbeitsabschnitt (4) zum Öffnen und Schließen eines Fluidkanals des Membranventils umfasst, wobei das Elastomer-Membranelement (2) einen den Arbeitsabschnitt (4) umgebenden Befestigungsabschnitt (6) zur Festlegung des Elastomer-Membranelements (2) gegenüber einem Ventilkörper des Membranventils umfasst, wobei zwischen dem Arbeitsabschnitt (4) und dem Befestigungsabschnitt (6) zumindest abschnittsweise eine Ausnehmung (30) angeordnet ist, die sich hin zu einer Mediumseite (14) des Elastomer-Membranelements (2) öffnet, und wobei der Befestigungsabschnitt (6) eine starre Einlage (22) umfasst, die zumindest abschnittsweise eine ringförmige Innenkontur (54) aufweist, **dadurch gekennzeichnet, dass**
sich die Ausnehmung (30) radial nach innen direkt an die starre Einlage (22) anschließt.

2. Das Elastomer-Membranelement (2) nach dem Anspruch 1, wobei eine erste Anlagefläche (40) des Befestigungsabschnitts (6) auf der Mediumseite (14) in einem nicht montierten Zustand des Elastomer-Membranelements (2) gegenüber einer zweiten Anlagefläche (42), welche sich auf der Mediumseite (14) radial nach innen an die Ausnehmung (30) anschließt, zurückspringt.

3. Das Elastomer-Membranelement (2) nach einem der vorstehenden Ansprüche, wobei die Ausnehmung (30) radial außerhalb eines mediengeführten Bereichs angeordnet ist.

4. Das Elastomer-Membranelement (2) nach einem der vorstehenden Ansprüche, wobei die Ausnehmung (30) zumindest abschnittsweise kreisringförmig ausgebildet ist.

5. Das Elastomer-Membranelement (2) nach einem der vorstehenden Ansprüche, wobei der Arbeitsabschnitt (4) eine Gewebeeinlage (38) umfasst, und wobei die Gewebeeinlage (38) innerhalb des Arbeitsabschnitts (4) hin zu einer Trockenseite (12) des Elastomer-Membranelements (2) angeordnet ist.

6. Das Elastomer-Membranelement (2) nach dem Anspruch 5, wobei ein Befestigungsmittel (8) für ein Druckstück eines Ventilantriebs auf der Trockenseite (12) des Elastomer-Membranelement (2) von dem Arbeitsabschnitt (4) abragt, wobei das Befestigungsmittel (8) abschnittsweise in dem Elastomer-Membranelement (2) aufgenommen ist, und wobei die Gewebeeinlage (38) in einen Durchmesserrücksprung (36) des Befestigungsmittels (8) hineinragt.

7. Das Elastomer-Membranelement (2) nach dem Anspruch 5, wobei die Trockenseite (12) des Arbeitsabschnitts (4) konzentrische Dehnungskonturen (18A-D) umfasst.

8. Das Elastomer-Membranelement (2) nach Z dem Anspruch 7, wobei die konzentrischen Dehnungskonturen (18A-D) durch Anlageflächen (20A, 20B) für ein Druckstück eines Ventilantriebs des Membranventils unterbrochen sind.

9. Ein Membranventil umfassend ein Elastomer-Membranelement (2) nach einem der vorstehenden Ansprüche.

## Claims

1. An elastomer membrane element (2) for a membrane valve, the elastomer membrane element (2) comprising a work portion (4) for opening and closing a fluid channel of the membrane valve, the elastomer membrane element (2) comprising a fastening portion (6) surrounding the work portion (4) for securing the elastomer membrane element (2) with respect to a valve body of the membrane valve, a recess (30) being arranged at least in portions between the work portion (4) and the fastening portion (6), which recess opens toward a medium side (14) of the elastomer membrane element (2), and the fastening portion (6) comprising a rigid insert (22) which has an annular inner contour (54) at least in portions, **characterized in that** the recess (30) radially inwardly directly adjoins the rigid insert (22).

2. The elastomer membrane element (2) according to claim 1, wherein, in a non-assembled state of the elastomer membrane element (2), a first abutment surface (40) of the fastening portion (6) on the medium side (14) springs back against a second abutment surface (42), which on the medium side (14) radially inwardly adjoins the recess (30) .

3. The elastomer membrane element (2) according to any of the preceding claims, wherein the recess (30) is arranged radially outside of a media-guiding region.

4. The elastomer membrane element (2) according to any of the preceding claims, wherein the recess (30) is ring-segment-shaped at least in portions.

5. The elastomer membrane element (2) according to any of the preceding claims, wherein the work portion (4) comprises a fabric insert (38), and wherein the fabric insert (38) within the work portion (4) is arranged toward a dry side (12) of the elastomer membrane element (2).

6. The elastomer membrane element (2) according to claim 5, wherein a fastening means (8) for a pressure piece of a valve drive on the dry side (12) of the elastomer membrane element (2) protrudes from the work portion (4), wherein the fastening means (8) is received in portions in the elastomer membrane element (2), and wherein the fabric insert (38) protrudes into a diametrical groove (36) in the fastening means (8).

7. The elastomer membrane element (2) according to claim 5, wherein the dry side (12) of the work portion (4) comprises concentric expansion contours (18A-D).

8. The elastomer membrane element (2) according to claim 7, wherein the concentric expansion contours (18A-D) are interrupted by abutment surfaces (20A, 20B) for a pressure piece of a valve drive of the membrane valve.

9. A membrane valve comprising an elastomer membrane element (2) according to any of the preceding claims.

## Revendications

1. Elément de membrane en élastomère (2) pour une vanne à membrane, dans lequel ledit élément de membrane en élastomère (2) comprend un tronçon de travail (4) pour ouvrir et fermer un canal de fluide de la vanne à membrane, dans lequel ledit élément de membrane en élastomère (2) comprend un tronçon de fixation (6) entourant le tronçon de travail (4) et destiné à fixer l'élément de membrane en élastomère (2) par rapport à un corps de vanne de la vanne à membrane, dans lequel un évidement (30) est disposé au moins par sections entre le tronçon de travail (4) et le tronçon de fixation (6) et s'ouvre vers un côté de milieu (14) de l'élément de membrane en élastomère (2), et dans lequel le tronçon de fixation (6) comprend un insert rigide (22) qui présente, au moins par sections, un contour intérieur annulaire (54), **caractérisé par le fait que** l'évidement (30) est contigu, radialement vers l'intérieur, directement à l'insert rigide (22).

2. Elément de membrane en élastomère (2) selon la revendication 1, dans lequel, dans un état non monté de l'élément de membrane en élastomère (2), une première surface d'appui (40) du tronçon de fixation (6) du côté de milieu (14) est en retrait par rapport à une deuxième surface d'appui (42) qui est contiguë, du côté de milieu (14), radialement vers l'intérieur à l'évidement (30).

3. Elément de membrane en élastomère (2) selon l'une quelconque des revendications précédentes, dans lequel l'évidement (30) est disposé radialement à l'extérieur d'une zone guidée par milieu.

4. Elément de membrane en élastomère (2) selon l'une quelconque des revendications précédentes, dans lequel l'évidement (30) est conçu au moins par sections en forme d'anneau de cercle.

5. Elément de membrane en élastomère (2) selon l'une quelconque des revendications précédentes, dans lequel le tronçon de travail (4) comprend un insert en tissu (38), et dans lequel l'insert en tissu (38) est disposé à l'intérieur du tronçon de travail (4) vers un côté sec (12) de l'élément de membrane en élastomère (2).

6. Elément de membrane en élastomère (2) selon la revendication 5, dans lequel un moyen de fixation (8) pour une pièce de pression d'un entraînement de vanne fait saillie du tronçon de travail (4) sur le côté sec (12) de l'élément de membrane en élastomère (2), dans lequel le moyen de fixation (8) est reçu par sections dans l'élément de membrane en élastomère (2), et dans lequel l'insert en tissu (38) fait saillie dans un retrait de diamètre (36) du moyen de fixation (8).

7. Elément de membrane en élastomère (2) selon la revendication 5, dans lequel le côté sec (12) du tronçon de travail (4) comprend des contours d'expansion concentriques (18A-D).

8. Elément de membrane en élastomère (2) selon la revendication 7, dans lequel les contours d'expansion concentriques (18A-D) sont interrompus par des surfaces d'appui (20A, 20B) pour une pièce de pression d'un entraînement de vanne de la vanne à membrane.

9. Vanne à membrane comprenant un élément de membrane en élastomère (2) selon l'une quelconque des revendications précédentes.
